# EUROPEAN PATENT APPLICATION

(11) **EP 1 314 742 A1**
(43) Date of publication of application: **28.05.2003**
(21) Application number: 02025632.7
(22) Date of filing: 19.11.2002
(51) Int. Cl.: C08B 30/00, C08B 35/00, A23L 1/0522

(54) **Solution stable low amylose tapioca starch and its use**

(30) Priority: 21.11.2001 US 339616 P; 22.10.2002 US 278201
(71) Applicant: National Starch and Chemical Investment Holding Corporation, New Castle, Delaware 19720 (US)
(72) Inventor: Jeffcoat, Roger, Bridgewater, New Jersey 08873 (US); Hanchett, Douglas J., Mine Hill, New Jersey 07801 (US); Tayal, Akash, Franklin Park, New Jersey 08823 (US); Merk, Angelica, Union, Nwe Jersey 07083 (US)
(74) Representative: Held, Stephan, Dr.rer.nat., Dipl.-Chem.

(57) **Abstract**

The present invention relates to a low amylose tapioca starch. Such starch has excellent solution stability, including freeze-thaw stability, and a chain length distribution similar to that of regular tapioca starch. The starch is useful in a wide variety of food, pharmaceutical, and industrial applications, either with or without chemical modification.

## Description

### BACKGROUND OF THE INVENTION

The present invention relates to a low amylose tapioca starch which exhibits good solution stability, including freeze thaw stability.

Starch, in general, contains two types of polymers, amylose which is essentially linear and amylopectin which is branched. Regular tapioca starch contains about 20-23% amylose; the balance being amylopectin. Low amylose tapioca starch contains a significantly higher level of amylopectin than common tapioca starch and therefore exhibits different properties which results in different functionality in industrial applications.

To meet the demanding needs of industry, regular tapioca starch is often modified by numerous techniques known in the industry to change the behavioral characteristics. In particular, modifications are often made to increase process tolerance and stability in an aqueous dispersion.

One common type of modification is cross-linking. When an aqueous dispersion of native tapioca starch is heated, the starch granules begin to swell, and the dispersion develops a short, salve-like texture which is important in imparting palatability and thickening in systems. However, during the process of cooking native starches, this textural state rapidly changes to an elastic, rubbery state in which the swollen granules rupture. Minor variations in cooking time, temperature, and concentration as well as shear and pH are sufficient to effect this transformation. Cross-linking acts to strengthen the granules by reinforcing the hydrogen bonds which are responsible for holding the granules intact and thus are used to overcome the extreme sensitivity of the swollen starch granules to handling and processing conditions.

Aqueous dispersions of cross-linked starch are often used under conditions which involve prolonged storage at relatively low temperature and/or exposure, at times, to repeated freezing and thawing cycles. For example, starch dispersions are used in numerous products such as canned and frozen foods, particularly fruit preps, pies, soups, and the like. In the case of canned food products, these are often stored in warehouses which have no heating facilities and may therefore be at very low temperatures for prolonged periods and may freeze during shipping. Frozen foods are also subject to long term storage at very low temperatures as well as freezing and thawing during distribution. Under such circumstances involving exposure to low temperature, there is a distinct loss in the hydrating power of the starch which is present in such food products, thereby resulting in syneresis, an extrusion of liquid, together with a marked deterioration in the texture, color and clarity of the food product.

Attempts to overcome these difficulties are known in the art and include the introduction of blocking groups onto the starch molecule by means of various chemical derivatization reactions, for example, reacting the starch with a monofunctional reagent to introduce substituents such as hydroxypropyl, phosphate, acetate or succinate groups. Such substituents stabilize the starch by interfering with the association between molecules or portions of the same molecule, thus reducing the tendency of the substituted starches to lose their hydration ability, clarity, and short, smooth texture on storage particularly at low temperatures.

These derivatization reactions alone may be carried out on native starches to improve their low temperature stability, but are frequently combined with cross-linking to obtain starches for use as thickeners in canned pie filings, retorted puddings and the like which will keep food from losing its clarity and texture when exposed to low or freezing temperatures.

Low amylose or waxy corn starches are well known in the art and have improved solution stability over regular starches. However, while sols of waxy maize starch are superior in stability to those of regular starch, even they are prone to intermolecular association during storage at or near freezing temperatures.

In recent years there has been a trend toward developing starches which have all the properties of a modified starch, but with much lower levels of, or even no, chemical treatment. For example, attempts have been made to increase the low temperature stability of starches by using β-amylase to enzymatically hydrolyze cross-linked waxy starches (Wurzburg, U.S. Patent No. 3,525,672) and native waxy maize starches (EP 574 721). Such hydrolysis shortens or removes the outermost a-chains of the starch molecule. Thus, the possibility of association on the part of these branches is lessened, resulting in significant reduction of syneresis and gelling of the food products during exposure to low or freezing temperatures.

Work was also done on the starch extracted from a homozygous recessive *su*_{*2*} waxy maize plant. It was discovered that this naturally short β-branched starch has excellent freeze-thaw stability (See Wurzburg, U.S. Patent No. 4,428,972 and Nagle, U.S. Patent No. 5,954,883). However, tapioca starch is desirous in many industrial applications for its properties, including low protein content and bland flavor in comparison with maize starches.

Surprisingly, it has now been discovered that low amylose tapioca starch has excellent solution stability, including freeze-thaw stability, yet retains a chain-length distribution similar to regular tapioca.

### SUMMARY OF THE INVENTION

The present invention relates to a low amylose tapioca starch. Such starch has excellent solution stability, including freeze-thaw stability, and a chain length distribution similar to that of regular tapioca starch. The starch is useful in a wide variety of food, pharmaceutical, and industrial applications, either with or without chemical modification.

Solution stability, as used herein, is intended to mean that the physical characteristics, including viscosity and solution clarity, of a starch sol or a starch containing composition will remain generally unchanged over time and temperature and includes low temperature and freeze-thaw stability. Low temperature and freeze-thaw stability, as used herein, is intended to mean that a sol of the starch will maintain its physical characteristics exposure to low or freezing temperature, including cycling through such temperatures, particularly that there is no distinct loss in the hydrating power of the starch, no syneresis, and no marked deterioration in the texture, color and clarity.

### BRIEF DESCRIPTION OF THE FIGURES

Figure 1 - Figures 1a and 1b depict the chain length distribution of regular and low amylose tapioca starches.
Figure 2 - Figure 2 depicts a Brabender curve showing the viscosity of low amylose and regular tapioca and corn starches modified with 0.02% POCl₃.
Figure 3 - Figure 3 depicts a Brabender curve showing the viscosity of low amylose and regular tapioca and corn starches modified with 0.02% POCl₃ and 3% PO.
Figure 4 - Figure 4 depicts a Brabender curve showing the viscosity of low amylose and regular tapioca and corn starches modified with 0.02% POCl₃ and 6% PO.
Figure 5 - Figure 5 depicts a Brabender curve showing the viscosity of low amylose and regular tapioca and corn starches modified with 0.02% POCl₃ and 9% PO.
Figure 6 - Figure 6 depicts the freeze-thaw stability of regular corn, regular tapioca, waxy maize, and low amylose tapioca starches, both modified and unmodified, at neutral pH.
Figure 7 - Figure 7 depicts the freeze-thaw stability of regular corn, regular tapioca, waxy maize, and low amylose tapioca starches, both modified and unmodified, at acidic pH.

### DETAILED DESCRIPTION OF THE INVENTION

The present invention relates to a low amylose tapioca starch. Such starch has excellent solution stability, including freeze-thaw stability, and a chain length distribution similar to that of regular tapioca starch. The starch is useful in a wide variety of food, pharmaceutical, and industrial applications, either with or without chemical modification.

Low amylose tapioca, as used herein, is intended to mean any tapioca starch which contains significantly less amylose than regular tapioca starch, particularly that which contains less than about 10%, more particularly less than about 5%, most particularly less than about 3% amylose by weight.

Low amylose tapioca starch may be obtained by the method of U.S. Application Number 09/832,626, herein incorporated in its entirety by reference.

Also included in this invention are low amylose tapioca starches derived from low amylose cassava plants which may be found in nature, obtained by standard breeding and crossbreeding techniques, or obtained by translocation, inversion, transformation or any other method of gene or chromosome engineering to include variations thereof, whereby the properties of the starch of this invention are obtained. In addition, starch extracted from a plant grown from artificial mutations and variations of the above generic composition which may be produced by known standard methods of mutation breeding is also applicable herein.

The substantially pure starch may be extracted from the root of a low amylose cassava plant. Extraction may be by any method known in the art, including but not limited to pulverizing the root and separating the starch from the remaining components by water extraction.

The resultant native starch has properties and functionality which are unique and desirable in many applications. Such native starches have the additional benefit of achieving the desired functionality without chemical modification. However, the present starches also may be modified to further enhance their properties and functionality. Any modifications known in the art may be used, including those which are chemical, physical, or enzymatic.

Chemical derivitization shall include those to form ethers, esters or half esters such as hydroxyalkyl ethers, acetates, phosphates, succinates, i.e., octenyl succinate, tertiary and quaternary amine ethers, etc., or by any other modification techniques known in the art.

The preferred chemical modification of the present starch is cross-linking. Any cross-linking agent known in the art may be employed for this purpose, including but not limited to epichlorohydrin, linear dicarboxylic acid anhydrides, citric acid acrolein, phosphorus oxychloride, adipic/acetic mixed acid anhydrides, and trimetaphosphate salts for food systems and to epichlorohydrin, linear dicarboxylic acid anhydrides, citric acid acrolein, phosphorus oxychloride, adipic/acetic mixed acid anhydrides, trimetaphosphate salts, formaldehyde, cyanuric chloride, diioscyanates, and divinyl sulfones in non-food systems. The cross-linking reaction is carried out using techniques known in the art, for example those described in U.S. Patent Nos. 2,328,537 and 2,801,242. Procedures for modifying starches are described in the Chapter "Starch and Its Modification" by M.W. Rutenberg, pages 22-26 to 22-47, Handbook of Water Soluble Gums and Resins, R.L. Davidson, Editor (McGraw-Hill, Inc., New York, NY 1980).

The amount of cross-linking agent necessary to give a suitable product will depend upon the desired functionality of the starch. Methods to obtain such functionality by crosslinking are well known in the art and will vary depending, *inter alia,* on the type of cross-linking agent employed, the concentration of the cross-linking agent, the reaction conditions, and the necessity for having a cross-linked starch. Typically, this amount will range from about 0.001 to about 10.0% by weight of the starch.

The present starches may be physically modified, such as by thermal inhibition described in WO 95/04082 (published February 9,1995) or by shear.

The present starches may also be enzymatically modified by one or more enzymes known in the art, including without limitation alpha-amylase, beta-amylase, glucoamylase, maltogenase, and pullulanase.

The starches may also be pregelatinized. Exemplary processes for preparing pregelatinized starches are disclosed in U.S. 4,280,851 (Pitchon, et al.), U.S. 4,465,702 (Eastman, et al.), U.S. 5,037,929 (Rajagopalan), U.S. 5,131,953 (Kasica, et al.), and U.S. 5,149,799 (Rubens). Conventional procedures for pregelatinizing starch are well known to those skilled in the art and described in such articles as Chapter XXII- "Production and Use of Pregelatinized Starch", Starch: Chemistry and Technology, Vol. III - Industrial Aspects, R.L. Whistler and E.F. Paschall, Editors, Academic Press, New York 1967.

The starches may also be converted to produce, *inter alia,* fluidity or thin-boiling starches prepared by oxidation, enzyme conversion particularly by α-amylase, acid hydrolysis, or heat and or acid dextrinization.

The present starches may be purified by any method known in the art to remove off-flavors and colors that are native to the starch or created during starch modification processes. Purification processes preferred for treating the present starches are disclosed in U.S. Serial No. 07/832,838 filed February 7, 1992, by Kasica, et al. Alkali washing techniques, for starches intended for use in either granular or pregelatinized form, are also useful and described in the family of patents represented by U.S. 5,187,272 (Bertalan, et al.).

One skilled in the art is capable of using any single or combination of modifications in order to obtain the desired starch properties and functionality. These methods are well known in the art and the resulting starch properties and functionality will vary depending, *inter alia,* on the type of modification employed, the degree of modification, and the reaction conditions. For example, the combination of stabilizing using propylene oxide and crosslinking using phosphorus oxychloride produces modified low amylose tapioca starches which have an onset gelatinization temperature which is at least about 5°C lower than the same modification on a normal tapioca

The solution stability, including low temperature and freeze-thaw stability, of the present starches is significantly better than that of waxy maize starch or regular tapioca starch. Using the freeze-thaw stability test described in the example procedures, *infra,* it was discovered that the present starches remain stable for an average of three to four cycles compared to zero to one for common waxy maize and regular tapioca starches. This is important in a variety of applications in which the starch-containing composition is exposed to prolonged storage at relatively low temperatures, including freezing temperatures, and/or exposure to repeated freezing and thawing cycles. This includes a variety of food products, particularly canned and frozen foods such as pies, soups, and the like. Use of the present starches in such applications will allow the food products to retain their quality by retarding syneresis and marked deterioration of product texture, color and clarity.

The good low temperature and freeze-thaw stability of the present starches is particularly surprising in view of its chain length distribution which is similar to that of regular tapioca starch. Previously discovered starches which had such improved stability had short a-chains, such as the enzymatically hydrolyzed starches described by

Wurzburg (U.S. Patent No. 3,525,672) and waxy maize starch which is homozygous for the *sugary-2* allele described by Wurzburg (U.S. Patent No. 4,428,972).

The present starches can be used in a variety of products as a direct replacement for conventional native or chemically modified starch(es). The low amylose tapioca starch may generally be used at any desired level, the amount being dependent upon the functionality to be obtained. In general, the low amylose tapioca starch will be used in an amount of from about 1% to about 95%, particularly from about 5% to about 60%, more particularly in an amount of about 10% to about 40% by weight of the product. The starch may be added in the same manner as conventionally used starches, either directly to the composition or by adding a slurry or sol containing the starch to the composition.

The low amylose tapioca starches of the present invention may be used in a variety of industrial applications, including without limitation paper products, food products, pharmaceutical and nutritional products, personal care products and other industrial products, particularly food products.

Paper products is intended to include, without limitation, paper, paperboard, linerboard, corrugating, cardboard, bags, and envelopes.

Pharmaceutical and nutritional products is intended to include pharmaceutical excipients such as binders, disintegrants, and diluents, tablets including effervescent tablets, dusting starches and powders, and prebiotics products.

Personal care products is intended to include without limitation deodorants and antiperspirants, hair fixatives including sprays, gels, mousses, lotions and pomades, soaps and cleansers, makeup including eye shadow, powders, foundations, and blushers, shampoos and conditioners, and mouthwashes, breath fresheners and toothpastes.

Other industrial products is intended to include without limitation detergents, and biodegradable foamed products including loosefill, sheets and shapes.

Food products is intended to mean any edible product and includes, without limitation, cereals, breads and bread products, cheese and imitation cheese products, condiments, confectioneries, dressings including pourable dressings and spoonable dressings, pie fillings including fruit and cream fillings, sauces, including white sauces and dairy-based sauces such as cheese sauces, gravies, imitation and lite syrups, puddings, custards, yogurts, sour creams, pastas, beverages including dairy-based beverages, glazes, soups, and baby foods.

Further, food product is intended to included those foods which undergo various processing and storage conditions including, but not limited to, retorting, aseptically filled packaging, refrigeration, and freezing.

The present starches may also be used in chemically and/or yeast leavened bakery products as an anti-stalent, providing a resultant product with a softer, moister crumb after baking as well as fresher texture and appearance after a storage period. The present starches, when used as an anti-stalent, are substituted for from about 3 to about 15% of the total farinaceous content of the dough.

The starch is typically added to a food composition by mixing the starch with water in any suitable proportion depending upon its end-use and the mixture is cooked as desired. If the starch has been modified so as to be cold-water swellable, then cooking is unnecessary. Flour or any ground plant products such as grits, hominy, and meal may be used in place of the starch.

### EXAMPLES

The following examples are presented to further illustrate and explain the present invention and should not be taken as limiting in any regard. All percents used are on a weight/weight basis.
In the examples below, the tapioca samples used are as follows:
Tapioca = regular tapioca starch commercially available from National Starch and Chemical Company (Bridgewater, NJ, USA).
LATS = low amylose tapioca starches genetically produced by introducing the GBSS enzyme in the antisense mode and using FEC freom which cassave plants are regenerated.
Corn = Regular corn starch commercially available from National Starch and Chemical Company (Bridgewater, NJ, USA)
Waxy corn = Low amylose corn starch commercially available from National Starch and Chemical Company (Bridgewater, NJ, USA)
AMFP = Low amylose potato starch available from Avebe B.A. (Foxhol, The Netherlands)
Waxy rice starch = Low amylose rice starch commercially available.

### The following procedures were used throughout the examples:

Solution stability test - The solution stability of the present starches was tested both by Differential scanning chromatography (DSC) and in starch sols.

a. Differential scanning chromatograpy - The starch sample is scanned from 5°C to 140°C at a heating rate of 10°C/min with water: starch ratio of 2:1. The sample is stored at 4.4°C (40°F) for seven (7) days. Retrogradation data is obtained by rescanning the stored samples. Duplicate runs are taken and the average is reported.

b. Starch sols - 100 g distilled water and 4 drops red food coloring are mixed in a beaker. 7.5 g starch at 12% moisture are added and mixed until free of lumps. The beaker is placed in a boiling water bath with the water level above that of the starch mixture. The mixture is heated to 190°F, stirring constantly, then covered and allowed to cook for an additional five minutes. The beaker is then placed in a cold bath, 55°F, until cooled to a temperature of 80°F. The starch mixture is poured into 2 oz. glass bottles to within ½ inch of the neck, removing any bubbles which are present. The samples are then refrigerated or frozen.

### i. Low temperature stability

The samples are refrigerated at 4.4°C (40°F). They are examined weekly for clarity and syneresis. When the sample becomes opaque, or water is present either on the surface or when pressed, the sample is no longer considered stable.

### ii. Freeze-thaw stability

The samples are frozen for 18 hours at -20°F, thawed for 6 hours at 70°F, and then examined for clarity, texture, and syneresis. This cycle is repeated until the sample is no longer stable. When the sample becomes opaque, loses its gelled quality, or water is present either on the surface or when pressed, the sample is no longer considered stable.

Amylose content -Amylose content was determined by potentiometric titration. Approximately 0.5 g of a starch sample was heated in 10mls of concentrated calcium chloride (about 30% by weight) to 95°C for 30 minutes. The sample was cooled to room temperature, diluted with 5 mls of a 2.5% uranyl acetate solution, mixed well, and centrifuged for 5 minutes at 2000 rpm. The sample was then filtered to give a clear solution.

The starch concentration was determined polarimetrically using a 1 cm polarimetric cell. An aliquot of the sample (normally 5 mls) was then directly titrated with a standardized 0.01 N iodine solution while recording the potential using a platinum electrode with a KCI reference electrode. The amount of iodine needed to reach the inflection point was measured directly as bound iodine. The amount of amylose was calculated by assuming 1.0 gram of amylose will bind with 200 miligrams of iodine.

The amylose contents were checked by gel permeation chromatograph (GPC). Samples were prepared for analysis by slurrying 4 to 8 mg of starch in 4 g of dimethylsulfoxide (DMSO) containing 5mM sodium nitrate and heating to 100°C for 2 hours. The sample was filtered if necessary, and injected (300µl) into a GPC 150C chromatograph (Waters Corporation, Amherst, MA). The Gel Permeation Chromatograph utilized 4 columns (guard column, 10⁵, 10³, 10² micron (nominal) pore size columns, all from Polymer Laboratories, Amherst, MA). The mobile phase was dimethyl sulfoxide containing 5 mM of sodium nitrate. The instrument was operated at a temperature of 80°C and a flow rate of 0.7 ml/minute was used. The columns were calibrated with pullulan standards (Showa Denko K.K., Japan) ranging in molecular weight from 5800 to 850,000.

Chain length - 20mg of starch was added to 2ml of 90% DMSO (10% water) and stirred (at 95°C) until dissolved. 7.980 ml of 50 mM Acetate Buffer pH 4.8 was added to the vial and stirred. If it appeared that some of the amylose precipitated out of solution, the solution was briefly boiled until clear. Once the sample had been completely dissolved, 20ul of pure isoamylase was added. The vial was incubated in a constant temperature bath for 16 hrs at 38°C.

Upon completion, chain-length distribution was determined by high performance anion exchange chromatography (HPAEC) with pulsed amperometric detection (Dionex Corp., Sunnyvale, CA). A Dionex Carbopac PA-100 column ( 4 x 250 mm) was used with a Carbopac PA Guard column (3 x 25 mm). The potential and time settings on PAD cell were E₁ = 0.10 (+₁ = 480); E₂ = 0.60 (+₂ = 120); E₃ = 0.80 V (t₃ = 300 ms).

The eluent A was 150 mM sodium hydroxide solution, which was prepared by dilution of carbonate-free 50% sodium hydroxide in deionized water. The eluent B was 150 mM sodium hydroxide solution, containing 500 mM sodium acetate. The gradient program used is shown in the table (Pump Gradient for Dionex) starting with 85% eluent A and 15% eluent B, ending with 100% eluent B. All separations were carried out at ambient temperatures with a flow rate of 1 ml/minute.

Note7: This measurement is made for all chains having a DP of up to 60, i.e., the percentage area DP shown will be the percent based on the total area of all chains up to 60. Also, 6 DP is the shortest chain that is seen.

### Pump Gradient for Dionex:

| Time | %A | %B |
|---|---|---|
| 0.0 | 85 | 15 |
| 0.1 | 85 | 15 |
| 0.4 | 85 | 15 |
| 20.0 | 65 | 35 |
| 35.0 | 50 | 50 |
| 50.0 | 40 | 60 |
| 75.0 | 30 | 70 |
| 85.0 | 25 | 75 |
| 87.0 | 0 | 100 |
| 95.0 | 85 | 5 |
| 105.0 | 85 | 15 |

To prepare the samples, each starch sample (20 mg) was weighed into a 10 ml vial; 2 ml of 90% DMSO (dimethyl sulfoxide) (DMSO:water=9:1, volume/volume) was added, mixed with a magnetic string bar, and heated in a boiling water bath for 5 minutes. Then, 7 ml of water was added and mixed. After the mixture was cooled to room temperature, 1 ml of 150 mM sodium hydroxide was added, mixed and 1 ml of solution was run by the Dionex.

Viscosity - Viscosity was measured using a Visco/amylo/graph, Model VA-1A (C.W. Brabender Instrument Co., Hackensack, NJ, USA 07606). A slurry of 5% starch on a dry weight basis was prepared and controlled to pH 3 using a citric acid/trisodium citrate buffer solution. The total charge weight of 460grams was heated from 50°C to 92°C at a rate of 1.5°C per minute. The slurry was then held at 92°C for 30 minutes. The hot viscosity was measured while heating the paste in the Visco/amylo/graph.

### Example 1 - Chain Length Distribution

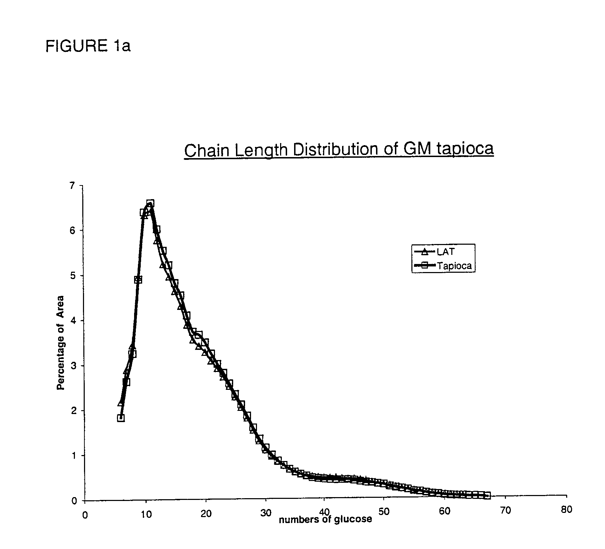

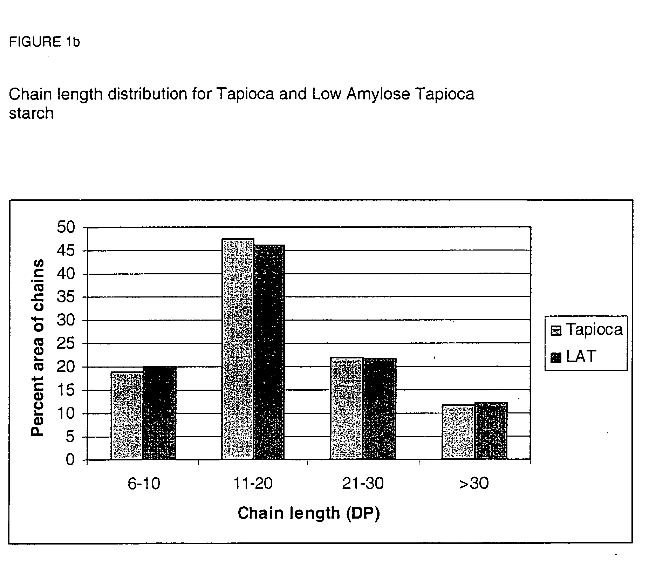

The chain length distribution of regular and low amylose tapioca starches were determined and the results are shown in Figures 1a and 1b. As can be seen the figures, the chain length distribution of these two starches are substantially the same.

### Example 2 - Freeze-Thaw Stability

The solution stability of a variety of starches was determined using DSC. The results are shown in Table I below.

**Table I -**

| Freeze-thaw Stability | | | | |
|---|---|---|---|---|
| Base | Onset (°C) | Peak (°C) | End (°C) | ΔH (J/g) |
| Tapioca | 41.7±0.4 | 54.2±0.2 | 64.2±0.1 | 5.97±0.17 |
| LATS | 39.9±0.8 | 53.6±0.6 | 63.3±0.3 | 2.57±0.03 |
| Corn | | | | 10.36 |
| Waxy Corn | 42.1±0.7 | 54.8±1.1 | 68.1±1.6 | 11.42±0.40 |
| AMFP | 41.5 | 62.9 | 74.5 | 6.5 |
| Waxy Rice | 40.0 | 51.5 | 62.0 | 3.75 |

As can be seen from Table I, low amylose tapioca starch has a significantly lower ΔH value than any other starch tested. This is indicative that it is significantly more solution stable.

### Example 3 - Viscosity of Stabilized, Crosslinked Low Amylose Tapioca Starches

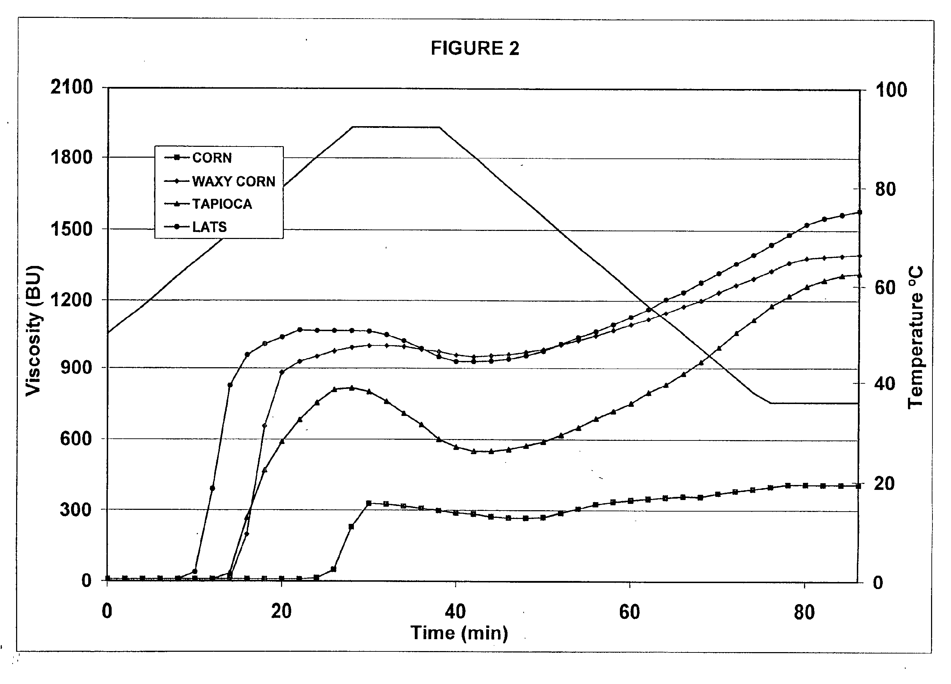

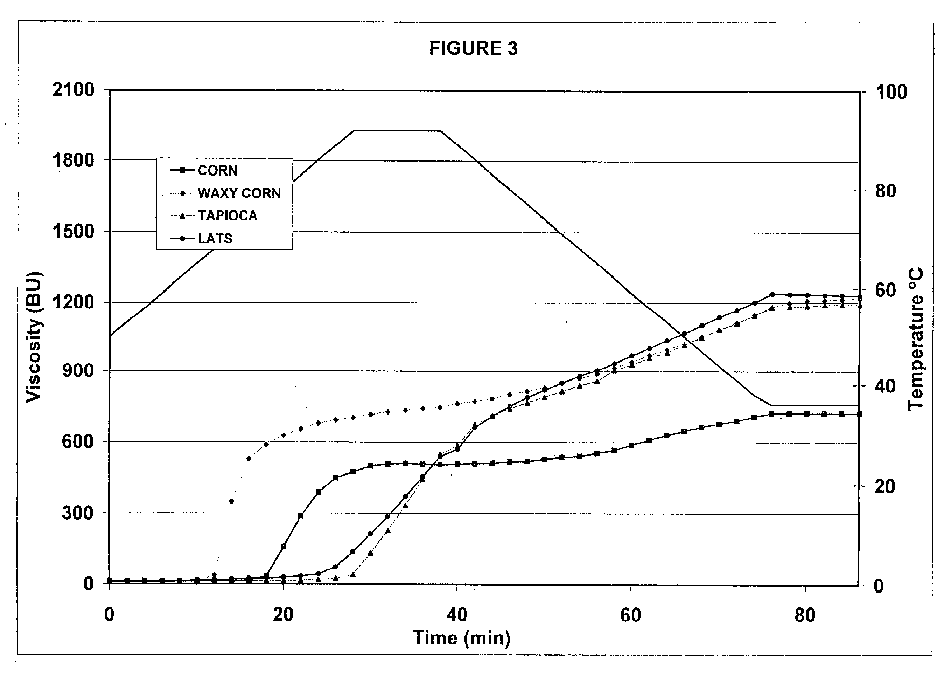

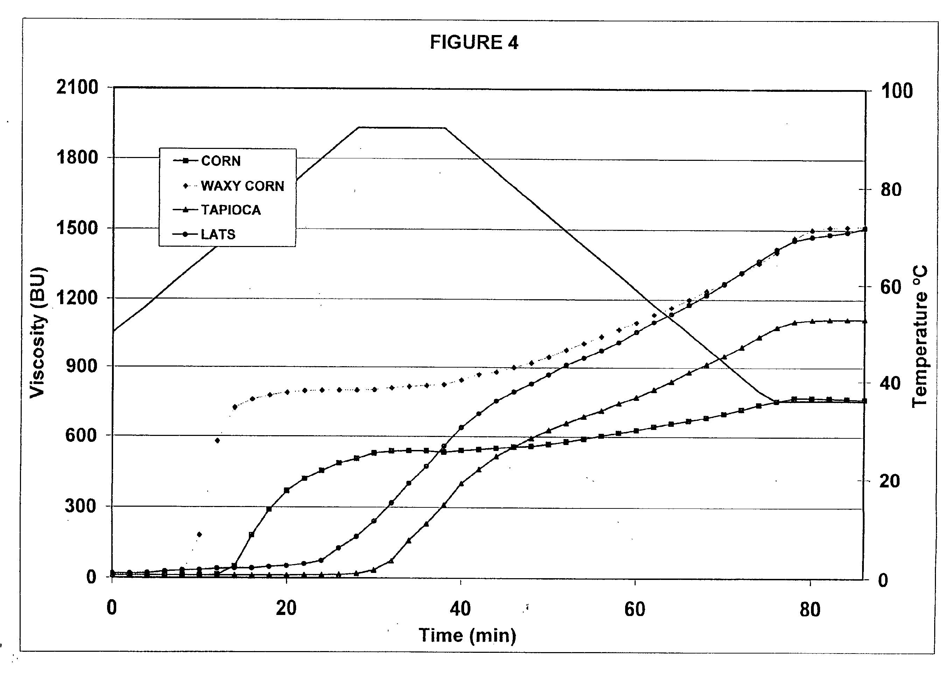

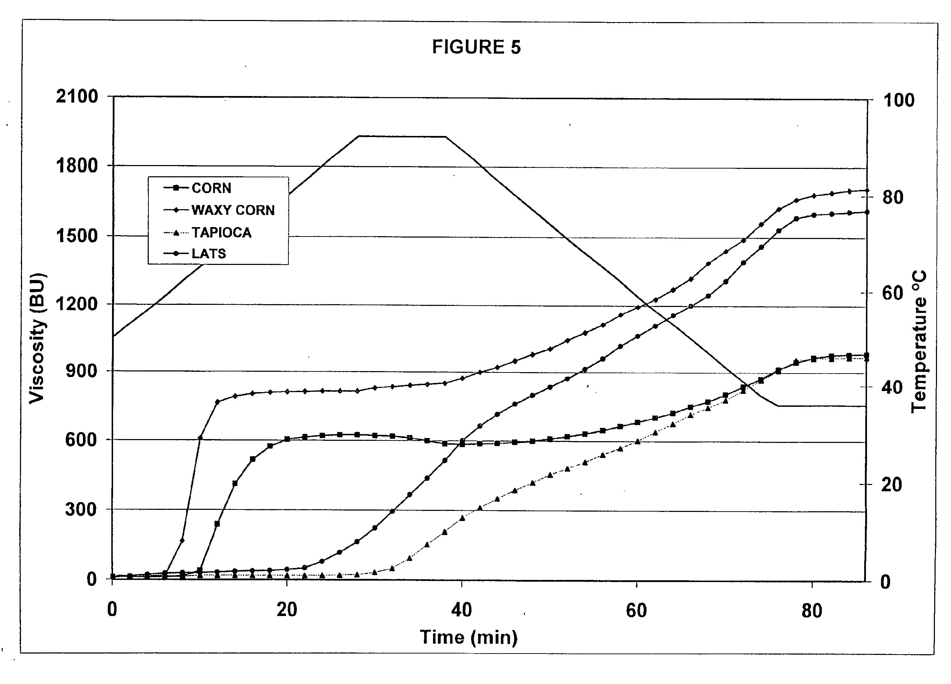

Low amylose and regular tapioca starches were stabilized using various levels of propylene oxide (0%, 3%, 6% and 9%) and crosslinked using phosphorus oxychloride at a level of 0.02%using methods known in the art. The viscosity of these starches were determined by Brabender and are reported in Figures 2-5. As can be seen from these figures, as the amount of stabilization is increased, the onset gelatinization temperature increases (ie. Gelatinization is delayed) and viscosity decreases. This shows that varying the modification can allow one skilled in the art to obtain different properties.

### Example 4 - Freeze-thaw Stability

The freeze thaw stability of various starches was determined using sols. The starch bases used were regular corn, waxy corn, regular tapioca, and low amylose tapioca. Such starches were tested both in the unmodified (native) and modified states. Modifications were conducted using standard methods known in the art.

### The starch bases are represented according to the following key:

C = regular corn (Corn);
W = waxy corn (Waxy Corn);
T = regular tapioca (Tapioca); and
M = low amylose tapioca (LATS).

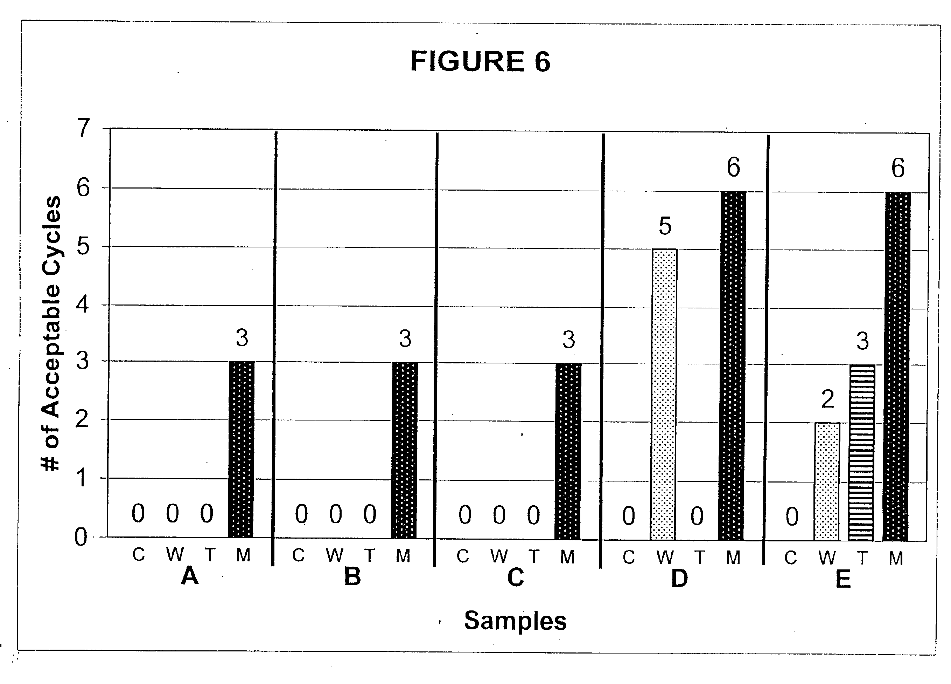

The results are shown in Figure 6, below. Results reported under "A" are for the unmodified (native) starches. Results reported for the modified starches are represented according to the following key:
B = base modified with 0.01% POCl₃
C = base modified with 0.02% POCl₃
D = base modified with 9% PO and 0.01% POCl₃
E = base modified with 3.9% acetic anhydride and 0.9% adipic acetic mixed anhydride

As can be seen from the results, the low amylose tapioca starches are more freeze-thaw stable than the other starches tested.

### Example 4 - Freeze-thaw Stability Under Acid Conditions

Example 2 was repeated with the exception that the starch dispersion is prepared using cranberry juice in place of water and additional modifications.

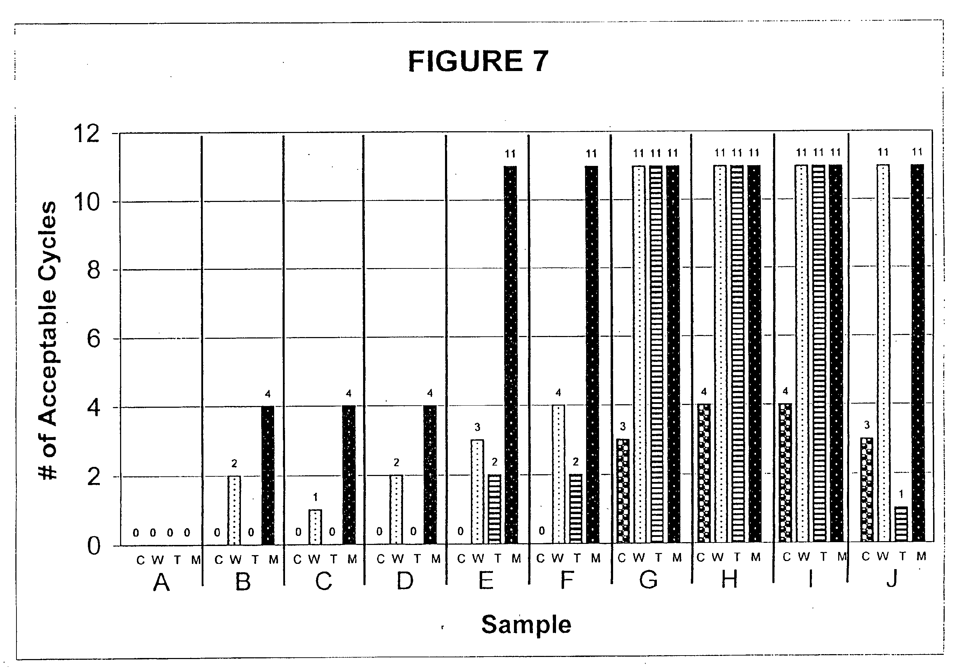

The results are shown in Figure 7, below. Results reported under "A" are for the unmodified (native) starches. Results reported for the modified starches are represented according to the following key:
B = base modified with 0.01% POCl₃
C = base modified with 0.02% POCl₃
D = base modified with 0.04% POCl₃
E = base modified with 3.9% acetic anhydride and 0.9% adipic acetic mixed anhydride
F = base modified with 3% PO and 0.02% POCl₃
G = base modified with 6% PO and 0.02% POCl₃
H = base modified with 9% PO and 0.01% POCl₃
I = base modified with 9% PO and 0.02% POCl₃
J = base modified with 9% PO and 0.04% POCl₃

As can be seen from the results, the low amylose tapioca starches are more freeze-thaw stable than the other starches tested.

## Claims

1. A low amylose tapioca starch having improved solution stability relative to regular tapioca starch.

2. A process of making a sol with a native low amylose tapioca starch comprising forming a slurry with water and an effective amount of the tapioca starch and cooking the slurry as necessary to produce the sol, wherein the sol is capable of withstanding at least one freeze-thaw cycle more than a sol prepared with native tapioca starch.

3. The process of claim 2, wherein the sol is capable of withstanding at least three freeze-thaw cycle more than a sol prepared with native tapioca starch.

4. The process of claim 2, wherein the sol is capable of withstanding at least four freeze-thaw cycle more than a sol prepared with native tapioca starch.

5. The process of any one of claims 2-4, wherein said tapioca starch has been modified chemically, physically, or enzymatically and wherein the sol is capable of withstanding at least one freeze-thaw cycle more than a sol prepared with a tapioca starch which has been modified in the same way and to the same degree.

6. The process of any one of claims 2-5, said starch being derivatized to contain substituent groups and cross-linked.

7. The sol produced by the process of any one of claims 2-6.

8. A composition comprising tapioca starch, the improvement comprising substituting a low amylose tapioca starch component for at least a portion of the tapioca starch in the composition.

9. The composition of claim 8, wherein the composition is selected from the group consisting of a paper product, a food product, a pharmaceutical product, a nutritional product, and a personal care product.

10. A food product which comprises a native low amylose tapioca starch and water, wherein the food product is capable of withstanding at least one freeze-thaw cycle more than a food product prepared with native tapioca starch.

11. The food product of claim 10, wherein the starch is cross-linked.

12. The food product of claim 10, wherein the starch is derivatized to contain substituent groups.

13. The food product of claim 10 wherein the starch is derivatized to contain substituent groups and cross-linked.

14. The food product of any one of claims 10-13, wherein the food product is selected from the group consisting of a dressing, a pie filling, a fruit prep, a sauce, a gravy a syrup, a pudding, a custard, a yogurt, a beverage, a glaze, a soup, and a baby food.

15. A process for preparing a thickened food product comprising combining water and an effective amount of a starch according to claim 1 and cooking the combination to produce a thickened food product, wherein the food product exhibits solution stability and wherein the food product is capable of withstanding at least one freeze-thaw stable cycle more than a food prepared with native tapioca starch.
